(19) Europäisches Patentamt
European Patent Office
Office européen des brevets

(11) **EP 3 913 101 B1**

(12) **EUROPEAN PATENT SPECIFICATION**

(45) Date of publication and mention
of the grant of the patent:
**29.11.2023 Bulletin 2023/48**

(51) International Patent Classification (IPC):
**C22C 19/05** (2006.01)     **C22F 1/10** (2006.01)

(21) Application number: **21175380.1**

(52) Cooperative Patent Classification (CPC):
**C22C 19/055; C22C 19/056; C22F 1/10**

(22) Date of filing: **21.05.2021**

(54) **NI-BASED ALLOY TUBE AND WELDED JOINT**

NI-BASIERTE LEGIERUNG UND SCHWEISSVERBINDUNG

TUBE EN ALLIAGE À BASE DE NI ET JOINT SOUDÉ

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **22.05.2020 JP 2020089752**

(43) Date of publication of application:
**24.11.2021 Bulletin 2021/47**

(73) Proprietor: **NIPPON STEEL CORPORATION**
**Chiyoda-ku**
**Tokyo 100-8071 (JP)**

(72) Inventors:
• **HIRATA, Hiroyuki**
**Tokyo, 100-8071 (JP)**
• **YOSHIZAWA, Mitsuru**
**Tokyo, 100-8071 (JP)**
• **OSUKI, Takahiro**
**Tokyo, 100-8071 (JP)**
• **TERUNUMA, Masaaki**
**Tokyo, 100-8071 (JP)**

(74) Representative: **Zimmermann & Partner**
**Patentanwälte mbB**
**Postfach 330 920**
**80069 München (DE)**

(56) References cited:
**EP-A1- 3 070 184     CN-A- 101 906 557**
**JP-A- H 073 368     JP-A- 2012 241 219**

**Description**

TECHNICAL FIELD

The present invention relates to a Ni-based alloy tube and a method of preparing a welded joint.

BACKGROUND ART

In a chemical plant and a power plant, various kinds of plant equipment such as flue gas treatment equipment and seawater treatment equipment are installed. An inside of a plant is a harsh corrosive environment where substances accelerating corrosion, such as chlorides and hydrogen sulfide are present in a large amount. For this reason, materials used for plant equipment are required to have a strength as well as corrosion resistance. Therefore, as disclosed in Patent Documents 1 to 8, Ni-based alloys with enhanced corrosion resistance, which are assumed to be used for plant equipment, are developed.

Patent Document 9 discloses a high Ni base alloy having an alloy composition containing, by weight, 0.001 to 0.05% C, ≤0.50% Si, ≤2.0% Mn, 2.5 to 20% Fe, 10 to 27% Cr, Mo alone or in combination with W by 3.0 to 24% (≤10% W in the case of the combination), ≤30% Al, ≤0.010% P, ≤0.0050% S and 0.050% N, and the balance Ni (≤60% Ni) with inevitable impurities and also having a composition in which the conditions in inequalities I and II are satisfied expressed in terms of atomic % and the frequency of the causing of twin crystals (the ratio of single crystals in which deformed with crystals are caused among the whole crystal grains) is regulated to ≥70% is prepared. In this way, the high Ni base alloy excellent in hydrogen embrittlement resistance as wall as stress corrosion cracking resistance can be obtained.

Patent Document 10 discloses an ultralow-temperature welded alloy steel and the production method thereof. The production method sequentially comprises the following working procedures of: 1) smelting; 2) electroslag remelting; 3) forging; 4) steel rolling; and 5) drawing. The low-temperature impact performance of the ultralow-temperature welded alloy steel is similar to that of the austenitic stainless steel, and even under the welding state, the ultralow-temperature welded alloy steel still has enough high impact property at subzero 196°C as well as good mechanical property and corrosion resistance in various corrosion media.

LIST OF PRIOR ART DOCUMENTS

PATENT DOCUMENT

Patent Document 1: JP54-110918A
Patent Document 2: JP63-89637A
Patent Document 3: JP2-156034A
Patent Document 4: JP3-173732A
Patent Document 5: JP5-271832A
Patent Document 6: JP9-87786A
Patent Document 7: JP10-30140A
Patent Document 8: JP2012-72446A
Patent Document 9: JP H07 3368 A
Patent Document 10: CN 101 906 557 A

SUMMARY OF INVENTION

TECHNICAL PROBLEM

Some kind of plant equipment is produced by constructing by welding. In such equipment, a weld bead shape may influence on corrosion behavior.

For example, some kind of heat exchanger consists of Ni-base alloy tubes serving as passage of coolant and constructed by butt-welding. When the heat exchanger is used, various kinds of corrosive fluid flow inside the tubes. At this point, if a height of an internal bead that is formed inside the tubes by welding, that is, a reinforcement of an internal bead is excessively high, the corrosive fluid accumulates and concentrates at a toe of weld, where a surface of the bead and a surface of a base metal intersect with each other. As a result, corrosion is liable to proceed at the toe of weld, which raises a problem.

On the other hand, if an amount of heat input during welding is reduced with an excessive decrease in a height of reinforcement intended, a butting surface between tubes is not melted completely, which makes it difficult to form a stable internal bead. As a result, a weld defect occurs, and corrosive fluid accumulates and concentrates in the weld defect, making corrosion liable to proceed, which raises a problem. However, Patent Documents 1 to 8 have no discussions about these problems.

Therefore, even when Ni-based alloy having high corrosion resistance is used as a material to produce tubes, it is difficult to form an internal bead having an appropriate shape during butt welding and making corrosion not liable to proceed between the tubes. In other words, a problem is that it is difficult to obtain a Ni-based alloy tube that allows an internal bead to be stably formed inside during welding and prevents a reinforcement with excessive height.

In view of the above, an objective of the present invention is to solve the problems described above and to provide a Ni-based alloy tube that allows an internal bead having good properties of its weldment to be formed stably, and a method of preparing a welded joint.

SOLUTION TO PROBLEM

The present invention is made to solve the above problems. The present invention is as defined in the appended claims.

ADVANTAGEOUS EFFECTS OF INVENTION

The present invention makes it possible to obtain a Ni-based alloy tube that allows an internal bead having good properties of a weldment to be formed stably.

BRIEF DESCRIPTION OF DRAWING

[Figure 1]

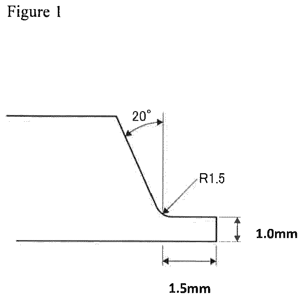

Figure 1 is a diagram illustrating a bevel shape in EXAMPLE.

DESCRIPTION OF EMBODIMENTS

The present inventors studied weldability of a Ni-based alloy tube and obtained the following findings (a) to (d).
(a) A shape of an internal bead of a Ni-based alloy tube formed during butt welding is influenced by contents of S and O contained in the tube. The present inventors revealed that, if the contents of S and O are small, the internal bead is not formed stably, and a butting surface partly remains unmelted.
On the other hand, if the contents of S and O are excessive, although the internal bead can be formed stably, a reinforcement of the internal bead becomes excessively high. Therefore, in this case, corrosive fluid accumulates in a vicinity of a bead, making corrosion liable to proceed. Hence, in order to allow an internal bead to be formed stably and prevent a reinforcement with excessive height, it is necessary to adjust the content of S and the content of O within their prescribed ranges.
(b) A possible reason that S and O have an influence on formation of a bead is as follows. S and O are surface-active elements and therefore strengthen inward convection in a molten pool during welding. As a result, welding heat is liable to be transmitted in a depth direction, which allows an internal bead to be formed stably. On the other hand, if S and O are contained excessively, a surface tension of molten metal is decreased excessively, which makes molten metal liable to suffer sagging. As a result, the internal bead is liable to have a convex shape where a shape of the internal bead excessively swells, (hereinafter, simply referred to as "convex shape"), and a height of reinforcement of the internal bead is liable to increase.
(c) Additionally, a shape of an internal bead is influenced by a surface roughness of an internal surface of the tube in a longitudinal direction. The present inventors revealed that, when a surface roughness is large, a height of reinforcement of an internal bead is increased, which makes an internal bead liable to have a convex shape. For this reason, it is desirable to control the surface roughness within a prescribed range. In particular, when a surface roughness of an internal surface of a tube in a longitudinal direction is large, molten metal is prevented from spreading in a width direction, which makes an internal bead have a convex shape, and a height of reinforcement of an internal bead is liable to increase.
(d) Moreover, the present inventors revealed that a shape of an internal bead is also influenced by a content of Sn. When Sn is contained, a penetration depth is increased, which allows an internal bead to be formed stably. On the other hand, if Sn is contained excessively, penetration becomes excessive, and an internal bead is liable to have a convex shape. A reason for this is considered that Sn vaporizes from a surface of a molten pool during welding and increases a degree of concentration of an arc. For this reason, when Sn is contained, it is necessary to control a content of Sn within a prescribed range and to make a relation among a content of S, a content of O, and the content of Sn satisfy a prescribed range so as to obtain an internal bead having an appropriate shape.

The present invention is made based on the findings described above. Requirements of the present invention will be described below in detail.

1. Chemical Composition of Alloy Tube

Reasons for limiting a content of each element are as follows. In the following description, a symbol "%" for each content means "mass%".

C: 0.0010 to 0.0200%

If C is contained excessively, C combines with Cr through weld thermal cycle to form carbide in grain boundaries in weld heat affected zone. Cr depleted zones are formed to develop in vicinities of the grain boundaries, decreasing corrosion resistance. For this reason, the content of C is set at 0.0200% or less. The content of C is to be preferably 0.0150% or less, more preferably 0.0100% or less, and still more preferably 0.0050% or less. From the viewpoint of corrosion resistance, the content of C is desirably reduced as much as possible, but an excessive reduction of the content of C increases production costs. For this reason, the content of C is to be 0.0010% or more. The content of C is to be preferably 0.0012% or more, more preferably 0.0015% or more, and still more preferably 0.0020% or more.

Si: 0.01 to 0.12%

Si has a deoxidation effect. For this reason, a content of Si is to be 0.01% or more. The content of Si is to be preferably 0.02% or more, more preferably 0.03% or more, and still more preferably 0.04% or more. However, if Si is contained excessively, a phase stability of the alloy is decreased, and a weld crack susceptibility of the alloy is increased. In addition, the excessive containing of Si may make it difficult for the internal bead to be formed stably. For this reason, the content of Si is to be 0.12% or less. The content of Si is to be preferably 0.10% or less, more preferably 0.08% or less, and still more preferably, 0.07% or less.

Mn: 0.04 to 0.50%

As with Si, Mn has a deoxidation effect. In addition, Mn has an effect of increasing a phase stability of metal and makes no small contribution to stable formation of the internal bead. For this reason, a content of Mn is to be 0.04% or more. The content of Mn is to be preferably 0.05% or more, and more preferably 0.06% or more. The content of Mn is to be 0.08% or more. However, if Mn is contained excessively, hot workability is decreased. For this reason, the content of Mn is to be 0.50% or less. The content of Mn is to be preferably 0.45% or less, more preferably 0.40% or less, and still more preferably 0.30% or less.

P: 0.015% or less

P is contained in the Ni-based alloy as an impurity and significantly increases weld crack susceptibility. For this reason, a content of P is to be 0.015% or less. The content of P is to be preferably 0.013% or less, and more preferably 0.012% or less. The content of P is preferably reduced as much as possible, but an excessive reduction of the content of P increases production costs. For this reason, the content of P is to be preferably 0.001% or more, and more preferably 0.002% or more.

S: 0.0001 to 0.0020%,

S is normally contained in the Ni-based alloy as an impurity, but in the alloy tube according to the present invention, S has an effect of increasing capability of forming the internal bead together with O during welding. For this reason, a content of S is to be 0.0001% or more. The content of S is to be preferably 0.0002% or more, and more preferably 0.0003% or more. However, if S is contained excessively, the internal bead is made to have a convex shape, and weld crack susceptibility is increased. For this reason, the content of S is to be 0.0020% or less. The content of S is to be preferably 0.0018% or less, and more preferably 0.0015% or less. Note that S is required to satisfy Formula (i) described below together with O and Sn.

Cu: 0.02 to 0.80%

Cu increases phase stability of metal and has an effect of increasing corrosion resistance under an environment where non-oxidizing acid and chloride are present. For this reason, a content of Cu is to be 0.02% or more. The content of Cu is to be preferably 0.03% or more, more preferably 0.04% or more, and still more preferably 0.08% or more. However, if Cu is contained excessively, hot workability is decreased. For this reason, the content of Cu is to be 0.80% or less. The content of Cu is to be preferably 0.60% or less, more preferably 0.50% or less, and still more preferably 0.40% or less.

Co: 0.10 to 2.50%

As with Cu, Co has an effect of increasing phase stability of metal. For this reason, a content of Co is to be 0.10% or more. The content of Co is to be preferably 0.20% or more, more preferably 0.30% or more, and still more preferably 0.40% or more. However, if Co is contained excessively, production costs are significantly increased because Co is a very expensive element. For this reason, the content of Co is to be 2.50% or less. The content of Co is to be preferably 1.40% or less, more preferably 1.20% or less, and still more preferably 1.00% or less.

Cr: 14.0 to 17.0%

Cr is an element that is essential in keeping corrosion resistance. In particular, Cr causes formation of a passivation film on a surface, increasing corrosion resistance under an acid environment of oxidative properties. For this reason, a content of Cr is to be 14.0% or more. The content of Cr is to be preferably 14.5% or more, more preferably 14.7% or more, and still more preferably 14.9% or more. However, if Cr is contained excessively, phase stability of metal is decreased. For this reason, the content of Cr is to be 17.0% or less. The content of Cr is to be preferably 16.8% or less, more preferably 16.5% or less, and still more preferably 16.3% or less.

Mo: 15.0 to 17.5%

Mo increases corrosion resistance under an environment where non-oxidizing acid and chloride are present. For this reason, a content of Mo is to be 15.0% or more. The content of Mo is to be preferably 15.2% or more, more preferably 15.5% or more, and still more preferably 15.7% or more. However, if Mo is contained excessively, phase stability of metal is decreased. Moreover, Mo is an expensive element, and thus production costs are increased. For this reason, the content of Mo is to be 17.5% or less. The content of Mo is to be preferably 17.3% or less, more preferably 17.0% or less, and still more preferably 16.8% or less.

W: 2.8 to 4.8%

As with Mo, W increases corrosion resistance under an environment where non-oxidizing acid and chloride are present. For this reason, a content of W is to be 2.8% or more. The content of W is to be preferably 2.9% or more, more preferably 3.0% or more, and still more preferably 3.2% or more. However, if W is contained excessively, phase stability of metal is decreased. Moreover, the containing of W increases production costs because W is an expensive element. For this reason, the content of W is to be 4.8% or less. The content of W is to be preferably 4.6% or less, more preferably 4.4% or less, and still more preferably 4.2% or less.

Fe: 4.0 to 7.5%

Fe is useful for increasing hot workability. In addition, Fe contributes to reduction of an alloy cost. For this reason, a content of Fe is to be 4.0% or more. The content of Fe is preferably to be 4.5% or more. The content of Fe is to be more preferably 5.0% or more, and still more preferably 5.5% or more. However, if Fe is contained excessively, phase stability of metal is decreased. For this reason, the content of Fe is to be 7.5% or less. The content of Fe is to be preferably 7.3% or less, more preferably 7.0% or less, and still more preferably 6.9% or less.

N: 0.0010 to 0.0200%

N contributes to phase stability of metal and has an effect of increasing pitting resistance. For this reason, a content of N is to be 0.0010% or more. The content of N is to be preferably 0.0015% or more, more preferably 0.0020% or more, and still more preferably 0.0025% or more. However, if N is contained excessively, nitride precipitates, decreasing ductility. For this reason, the content of N is to be 0.0200% or less. The content of N is to be preferably 0.0180% or less, more preferably 0.0150% or less, and still more preferably 0.0120% or less.

Al: 0.04 to 0.50%

Al has a deoxidation effect. Al contributes to increase in oxidation resistance at high temperature. For this reason, a content of Al is to be 0.04% or more. The content of Al is to be preferably 0.06% or more, and more preferably 0.08% or more. Still more preferably, the content of Al is to be 0.10% or more. However, if Al is contained excessively, Al forms a brittle compound with Ni, decreasing hot workability. In addition, the excessive containing of Al may make it difficult for the internal bead to be formed stably. For this reason, the content of Al is to be 0.50% or less. The content of Al is to be preferably 0.45% or less, more preferably 0.40% or less, and still more preferably 0.35% or less.

O: 0.0004 to 0.0100%

O is normally contained in the Ni-based alloy as an impurity, but in the alloy tube according to the present invention, O has an effect of increasing capability of forming the internal bead together with S during welding. For this reason, a content of O is to be 0.0004% or more. The content of O is to be preferably 0.0006% or more, and more preferably 0.0008% or more. However, if O is contained excessively, the internal bead is made to have a convex shape, and hot workability is decreased. For this reason, the content of O is set at 0.0100% or less. The content of O is to be preferably 0.0080% or less, and more preferably 0.0060% or less. Note that O is required to satisfy Formula (i) described below together with S and Sn.

In the chemical composition, in addition to the elements described above, Sn may be contained within the range described below.

Sn: 0 to 0.010%

Sn has an effect of increasing a penetration depth during welding, increasing a capability of forming the internal bead. Therefore, it may be contained when necessary. However, if Sn is contained excessively, hot workability is decreased, and weld crack susceptibility is increased. In addition, the internal bead is liable to have a convex shape. For this reason, a content of Sn is to be 0.010% or less. The content of Sn is to be preferably 0.009% or less, and more preferably 0.008% or less. On the other hand, to obtain the effects described above, the content of Sn is to be preferably 0.001% or more, more preferably 0.002% or more, and still more preferably 0.003% or more. Note that Sn is required to satisfy Formula (i) described below together with S and O.

As described above, since S, O, and Sn effectively contribute to formation of an internal bead of the tube, the following Formula (i), which is a numerical relation among the content of S, the content of O, and the content of Sn, needs to be satisfied for the Ni-based alloy tube according to the present invention.

$$0.0010 \le S + 2O + 0.2Sn \le 0.0170 \qquad (i)$$

where each symbol of an element in the formula indicates a content of the element (mass%) contained in Ni-based alloy, and a content being zero means that the element is not contained. When the content of Sn is less than 0.001%, Sn is treated as Sn = 0 in the above formula.

S and O are surface-active elements and have an action of strengthening inward convection in a molten pool during welding. In addition, Sn contributes to formation of an arc energizing path and has an effect of increasing a degree of concentration of an arc. Welding heat is thereby transmitted in a depth direction at a center of the molten pool. As a result, although these elements have an effect of stable formation of the internal bead, the middle value of Formula (i) being less than 0.0010% fails to provide this effect. Therefore, the middle value of Formula (i) is to be 0.0010% or more. The middle value of Formula (i) is to be preferably 0.0012% or more, and more preferably 0.0015% or more.

On the other hand, if the middle value of Formula (i) is more than 0.0170%, a surface tension of molten metal is decreased, or melting of the center of the molten pool is accelerated, which causes sagging. As a result, the internal bead is made to have a convex shape, and it is no longer possible to form the internal bead stably inside the tube. Therefore, the middle value of Formula (i) is to be 0.0170% or less. The middle value of Formula (i) is to be preferably 0.0165% or less, and more preferably 0.0160% or less.

In the chemical composition, in addition to the elements described above, one or more elements selected from V, Ti, Nb, Ta, Ca, Mg, B, and REM may be contained within the ranges described below. Reasons for limiting a content of each element will be described.

V: 0.40% or less

V combines with carbon to form its carbide, preventing or reducing formation of Cr carbide, so as to mitigate deterioration in corrosion resistance of grain boundaries. Therefore, it may be contained when necessary. However, if V is contained excessively, carbide and carbo-nitride of V precipitate in a large quantity, decreasing ductility. For that reason, the content of V is to be 0.40% or less. The content of V is to be preferably 0.35% or less, and more preferably 0.30% or less. On the other hand, to obtain the effect described above, the content of V is to be preferably 0.01% or more, and more preferably 0.02% or more.

Ti: 0.40% or less

As with V, Ti combines with carbon to form its carbide, preventing or reducing formation of Cr carbide, so as to mitigate deterioration in corrosion resistance of grain boundaries. However, if Ti is contained excessively, carbide and carbo-nitride of Ti precipitate in a large quantity, decreasing ductility. For this reason, a content of Ti is to be 0.40% or less. The content of Ti is to be preferably 0.35% or less, and more preferably 0.30% or less. On the other hand, to obtain the effect described above, the content of Ti is to be preferably 0.01% or more, and more preferably 0.02% or more.

Nb: 0.40% or less

As with V and Ti, Nb combines with carbon to form its carbide, preventing or reducing formation of Cr carbide, so as to mitigate deterioration in corrosion resistance of grain boundaries. Therefore, it may be contained when necessary. However, if Nb is contained excessively, carbide and carbo-nitride of Nb precipitate in a large quantity, decreasing ductility. In addition, weld crack susceptibility is increased. For that reason, a content of Nb is to be 0.40% or less. The content of Nb is to be preferably 0.35% or less, and more preferably 0.30% or less. On the other hand, to obtain the effect described above, the content of Nb is to be preferably 0.01% or more, and more preferably 0.02% or more.

Ta: 0.40% or less

Ta accelerates formation of a passivation film of Cr and has an effect of increasing corrosion resistance. Therefore, it may be contained when necessary. However, if Ta is contained excessively, carbide of Ta precipitates in a large quantity, decreasing ductility. For that reason, a content of Ta is to be 0.40% or less. The content of Ta is to be preferably 0.35% or less, and more preferably 0.30% or less. On the other hand, to obtain the effect described above, the content of Ta is to be preferably 0.01% or more, and more preferably 0.02% or more.

Ca: 0.0030% or less

Ca has an effect of improving hot workability. Therefore, it may be contained when necessary. However, if Ca is contained excessively, Ca combines with oxygen, significantly decreasing cleanliness. As a result, hot workability is rather decreased. For this reason, a content of Ca is to be 0.0030% or less. The content of Ca is to be preferably 0.0020% or less, and more preferably 0.0010% or less. On the other hand, to obtain the effect described above, the content of Ca is to be preferably 0.0001% or more, and more preferably 0.0003% or more.

Mg: 0.0030% or less

As with Ca, Mg has an effect of improving hot workability. Therefore, it may be contained when necessary. However, if Mg is contained excessively, Mg combines with oxygen, significantly decreasing cleanliness. As a result, hot workability is rather decreased. For this reason, a content of Mg is to be 0.0030% or less. The content of Mg is to be preferably 0.0020% or less, and more preferably 0.0010% or less. On the other hand, to obtain the effect described above, the content of Mg is to be preferably 0.0001% or more, and more preferably 0.0003% or more.

B: 0.0100% or less

B segregates in grain boundaries at high temperature and has effects of strengthening the grain boundaries and increasing hot workability. Therefore, it may be contained when necessary. However, if B is contained excessively, weld crack susceptibility is increased. For this reason, a content of B is set at 0.0100% or less. The content of B is to be preferably 0.0080% or less, and more preferably 0.0060% or less. On the other hand, to obtain the effects described above, the content of B is to be preferably 0.0002% or more, and more preferably 0.0005% or more.

REM: 0.0100% or less

As with Ca and Mg, REM has an effect of improving hot workability in production. Therefore, it may be contained when necessary. However, if REM is contained excessively, REM combines with oxygen, significantly decreasing cleanliness. As a result, hot workability is rather decreased. For this reason, a content of REM is set at 0.0100% or less. The content of REM is to be preferably 0.0050% or less, and more preferably 0.0030% or less. On the other hand, to obtain the effect described above, the content of REM is to be preferably 0.0001% or more, and more preferably 0.0003% or more. Here, REM refers to Sc, Y, and lanthanoids, and the content of REM refers to the amount of these elements.

In the chemical composition of the Ni-based alloy according to the present invention, the balance is Ni and impurities. The term "impurities" as used herein means elements that are not added intentionally but are mixed in the Ni-based alloy in producing the Ni-based alloy industrially due to various factors such as raw materials and a production process, and that are allowed to be within ranges in which the impurities have no adverse effect on the present invention.

2. Internal Surface Roughness of Alloy Tube

An internal bead is formed when end portions of alloy tubes are welded together. To form a favorable internal bead, it is preferable to control, an arithmetic average roughness Ra on an internal surface of the alloy tube in a longitudinal direction. An internal surface roughness of the alloy tube herein refers to a surface roughness after a final process in a production process. In other words, although the internal surface roughness of the alloy tube fluctuates in a course of the production, a surface roughness in a middle of the production does not matter in obtaining an advantageous effect of the present invention, and it will suffice that the internal surface roughness of the tube in the longitudinal direction after the final process satisfies a range specified in the present invention.

On the internal surface of the Ni-based alloy tube, if the arithmetic average roughness Ra of the tube in the longitudinal direction is more than 7.0 $\mu$m, weld metal is hindered from wetting on the internal surface of the tube, and thus the weld metal resists spreading along a width direction, that is, a circumference of the tube. As a result, the internal bead is liable to have a convex shape, and a height of reinforcement is liable to increase. For this reason, on the internal surface of the Ni-based alloy tube, the arithmetic average roughness Ra of the tube in the longitudinal direction is to be preferably 7.0 $\mu$m or less. The arithmetic average roughness Ra is to be preferably 5.0 $\mu$m or less, and more preferably 3.0 $\mu$m or less. A lower limit value of the arithmetic average roughness Ra is not limited to a specific value; however, in many cases, the arithmetic average roughness Ra is normally 0.1 to 1.0 $\mu$m or more in a case where a production method described below is used.

Here, the arithmetic average roughness Ra is specified in JIS B 0601:2001 and can be measured by using a contact-type surface roughness instrument.

3. Welded Joint

A welded joint of Ni-based alloy tubes described above can be obtained by performing butt welding on tube ends of the Ni-based alloy tubes under predetermined conditions. The welded joint of the Ni-based alloy tubes includes weld metal which is to be a weldment by solidification, and base material portion. The base material portions each include a weld heat affected zone that is influenced by heat input of welding. The base material portion excluding the weld heat affected zone inherits the chemical composition, the surface roughness, and other properties of the Ni-based alloy tube described in Sections 1 and 2 described above. The weldment refers to the weld metal and the weld heat affected zone.

4. Production Method

A preferable production method for the Ni-based alloy tube according to the present invention will be described. The Ni-based alloy tube according to the present invention provides its advantageous effects irrespective of its production method as long as the Ni-based alloy tube has the requirement described above; nonetheless, the Ni-based alloy tube can be produced stably by a production method described below, for example.

4-1. Ni-Based Alloy Tube

First, a Ni-based alloy ingot being a starting material of the Ni-based alloy tube is produced. The Ni-based alloy ingot is preferably produced by melting an alloy having the chemical composition described above using an electric furnace, refining the alloy to remove impurities, and casting the alloy. Subsequently, the obtained ingot is preferably subjected to hot forging to be formed into a billet having a columnar shape. Thereafter, the obtained billet is worked to be shaped into a tube.

Specifically, the billet is preferably subjected to hot extrusion and then to cold rolling or cold drawing. Softening heat treatment and intermediate pickling may be performed in the middle of the working when necessary. Thereafter, the alloy tube is preferably subj ected to solution treatment as heat treatment. After the solution treatment, pickling or working may be performed when necessary.

Here, in order to bring the arithmetic average roughness Ra of the internal surface of tube in the longitudinal direction to 7.0 μm or less, it is preferable to perform the following process. Specifically, the solution treatment is preferably performed under such conditions of heating in a temperature region of 950°C to 1230°C for 1 to 15 minutes and performing water cooling. Additionally, it is preferable to perform one of machining such as grinder processing and grinding, and shotblast or shotpeening treatment, on the internal surface of the tube.

Although the arithmetic average roughness Ra fluctuates in a course of the production, an advantageous effect of the present invention does not pertain to the surface roughness in the middle of the course and is influenced only by the surface roughness of the tube in the longitudinal direction after the final process.

4-2. Welded Joint of Ni-Based Alloy Tubes

A welded joint can be obtained by welding together end portions of Ni-based alloy tubes according to the present invention as starting materials. A method for the welding is not limited to a specific method; however, the welding can be performed by arc welding, for example. As a condition for performing arc welding, for example, a heat input is preferably set to be within the range from 4 to 20 kJ/cm. In addition, it is preferable to use Ar gas as shielding gas and back shielding gas during welding. A flow rate of the gas flowed to a welding location is preferably adjusted as appropriate.

A chemical composition of a welding material (filler material) to be used is not limited to a specific material, either; however, the chemical composition is preferably a composition described below. In other words, it is preferable for the composition to contain, in mass%, C: 0.150% or less, Si: 1.00% or less, Mn: 3.50% or less, P: 0.030% or less, S: 0.0001 to 0.0100%, Fe: 38.0% or less, Cu: 3.00% or less, Co: 15.0% or less, Cr: 14.0 to 26.0%, Mo: 17.0% or less, W: 4.5% or less, at least one of Nb and Ta: 4.20% or less in total, Ti: 1.50% or less, V: 0.35% or less, N: 0.0500% or less, Al: 1.50% or less, and O: 0.0004 to 0.0100%, with the balance being Ni and impurities, and to make a relation between contents of S and O satisfy Formula (a) shown below.

$$0.0010 \le S + 2O \le 0.0170 \qquad (a)$$

where each symbol of an element in the formulas indicates a content of the element (mass%) contained in the welding material, and a content being zero means that the element is not contained.

The present invention will be described below more specifically with reference to examples, but the present invention is not limited to these examples.

EXAMPLE

Alloys having chemical compositions shown in Table 1 were melted and produced into ingots. Thereafter, the ingots were subjected to hot forging and hot rolling to have a thickness of 10 mm. Subsequently, scales formed on their surfaces were removed by pickling. At this point, arithmetic average roughnesses Ra of all steel types were about 10 μm. Thereafter, with a production process of an alloy tube assumed, cold rolling was performed while softening heat treatment and intermediate pickling were performed, by which 3-mm alloy plates were obtained.

Subsequently, the alloy plates were performed solution treatment that the alloy plates were retained in a hydrogen furnace at 1150°C for 10 minutes and cooled by water cooling. Thereafter, test plates each having a width of 50 mm and a length of 100 mm were cut from the alloy plates. For some of the test plates, shotpeening was conducted on only one side, assuming the internal surface of the alloy tube, as shown in Table 2. For the rest of test plates which were not subjected to the shotpeening, one side of test plates were machine-ground or polished 1 to 5 times using a whetstone with granularity of #40 or #60. In Table 2, for example, polishing (#40 × 1 time) indicates that a test plate was polished once using a whetstone with a granularity of #40.

[Table 1]

Table 1

| Alloy type | Chemical Composition (mass%, Balance: Ni and impurities) | | | | | | | | | | | | | | | | | | | | | | | Middle value of Formula (i) |
|---|---|---|---|---|---|---|---|---|---|---|---|---|---|---|---|---|---|---|---|---|---|---|---|---|
| | C | Si | Mn | P | S | Cu | Co | Cr | Mo | W | Fe | N | Al | O | Sn | V | Ti | Nb | Ta | Ca | Mg | B | REM | |
| A | 0.0020 | 0.03 | 0.08 | 0.009 | 0.0002 | 0.10 | 0.81 | 15.5 | 15.8 | 3.4 | 6.7 | 0.0080 | 0.21 | 0.0032 | - | - | - | - | - | - | - | - | - | 0.0066 |
| B | 0.0015 | 0.01 | 0.10 | 0.010 | 0.0001 | 0.08 | 0.78 | 14.7 | 15.5 | 3.0 | 6.2 | 0.0077 | 0.19 | 0.0025 | 0.003 | - | - | - | - | - | - | - | - | 0.0057 |
| C | 0.0098 | 0.02 | 0.04 | 0.008 | 0.0003 | 0.03 | 1.18 | 16.8 | 17.3 | 4.4 | 7.0 | 0.0020 | 0.39 | 0.0006 | - | - | - | - | - | - | - | - | - | 0.0015 |
| D | 0.0012 | 0.08 | 0.45 | 0.013 | 0.0014 | 0.59 | 0.20 | 16.4 | 16.1 | 4.0 | 7.3 | 0.0149 | 0.06 | 0.0058 | - | - | - | - | - | - | - | - | - | 0.0130 |
| E | 0.0150 | 0.03 | 0.21 | 0.012 | 0.0004 | 0.12 | 0.35 | 14.5 | 15.1 | 3.1 | 5.5 | 0.0120 | 0.44 | 0.0004 | 0.008 | 0.01 | 0.02 | - | - | 0.0003 | - | - | - | 0.0028 |
| F | 0.0032 | 0.10 | 0.12 | 0.010 | 0.0018 | 0.50 | 0.11 | 15.0 | 15.5 | 3.2 | 6.0 | 0.0034 | 0.09 | 0.0065 | 0.002 | - | - | 0.02 | 0.01 | - | 0.0002 | - | - | 0.0152 |
| G | 0.0196 | 0.06 | 0.49 | 0.010 | 0.0010 | 0.04 | 1.40 | 14.1 | 16.9 | 4.6 | 4.5 | 0.0015 | 0.04 | 0.0079 | - | - | - | - | - | - | - | 0.0018 | - | 0.0168 |
| H | 0.0045 | 0.12 | 0.07 | 0.015 | 0.0001 | 0.76 | 2.35 | 16.2 | 16.6 | 3.5 | 5.1 | 0.0180 | 0.25 | 0.0005 | - | - | - | - | - | - | - | - | 0.0004 | 0.0011 |
| I | 0.0024 | 0.04 | 0.25 | 0.011 | 0.0017 | 0.23 | 0.77 | 15.2 | 15.8 | 3.0 | 6.2 | 0.0085 | 0.05 | 0.0078 | - | - | 0.05 | - | - | - | - | 0.0032 | - | <u>0.0173</u> |
| J | 0.0028 | 0.11 | 0.30 | 0.012 | 0.0001 | 0.11 | 0.45 | 14.0 | 15.2 | 3.8 | 6.5 | 0.0122 | 0.48 | 0.0004 | - | - | - | - | - | - | - | - | - | <u>0.0009</u> |
| K | 0.0019 | 0.05 | 0.19 | 0.010 | 0.0007 | 0.62 | 0.10 | 15.8 | 16.0 | 4.0 | 6.8 | 0.0148 | 0.04 | 0.0086 | 0.005 | - | - | - | - | - | - | - | - | <u>0.0189</u> |
| L | 0.0020 | 0.05 | 0.11 | 0.008 | 0.0009 | 0.15 | 0.85 | 15.2 | 16.0 | 3.1 | 6.5 | 0.0091 | 0.20 | 0.0034 | 0.004 | - | - | - | - | - | - | - | - | 0.0085 |
| M | 0.0015 | 0.02 | 0.43 | 0.010 | 0.0001 | 0.20 | 0.84 | 15.5 | 15.8 | 3.1 | 6.2 | 0.0121 | 0.05 | 0.0004 | 0.002 | - | - | - | - | - | - | 0.0015 | 0.0005 | 0.0013 |
| N | 0.0098 | 0.06 | 0.20 | 0.012 | 0.0010 | 0.18 | 0.78 | 16.4 | 15.9 | 4.2 | 7.2 | 0.0045 | 0.22 | 0.0069 | 0.010 | - | - | - | - | - | - | - | - | 0.0168 |
| O | 0.0012 | 0.05 | 0.35 | 0.011 | 0.0012 | 0.32 | 0.85 | 14.9 | 16.3 | 3.9 | 6.8 | 0.0057 | 0.06 | 0.0078 | 0.003 | - | - | - | - | - | - | - | - | <u>0.0174</u> |
| P | 0.0012 | 0.04 | 0.40 | 0.008 | 0.0017 | 0.14 | 1.04 | 16.0 | 16.2 | 3.5 | 7.0 | 0.0080 | 0.04 | 0.0058 | <u>0.012</u> | - | - | - | - | - | - | - | - | 0.0157 |
| Q | 0.0150 | 0.12 | 0.08 | 0.010 | 0.0001 | 0.44 | 0.25 | 15.7 | 15.6 | 3.1 | 6.3 | 0.0075 | 0.45 | <u>0.0003</u> | 0.001 | - | - | - | - | - | - | - | - | <u>0.0009</u> |

$0.0010 \leq S + 2O + 0.2Sn \leq 0.0170 \cdots (i)$

The underlined indicates that the value fell out of the range defined in the present invention.

[Table 2]

Table 2

| Test piece | Alloy type | Condition of production | Property |
| --- | --- | --- | --- |
| | | Treatment of back-side of plate | Arithmetic average roughness Ra (urn) |
| A1 | | Shotpeening | 2.2 |
| A2 | | Machine grinding | 6.5 |
| A3 | | Polishing (#40×1 time) | 9.3 ** |
| A4 | | Polishing (#40×2 times) | 7.4 ** |
| A5 | A | Polishing (#60×1 time) | 6.8 |
| A6 | | Polishing (#60×2 times) | 5.5 |
| A7 | | Polishing (#60×3 times) | 3.0 |
| A8 | | Polishing (#60x4 times) | 1.5 |
| A9 | | Polishing (#60×5 times) | 0.8 |
| B1 | | Shotpeening | 2.0 |
| B2 | | Machine grinding | 6.7 |
| B3 | | Polishing (#40×1 time) | 9.0 ** |
| B4 | | Polishing (#40×2 times) | 7.2 ** |
| B5 | B | Polishing (#60×1 time) | 6.5 |
| B6 | | Polishing (#60×2 times) | 5.3 |
| B7 | | Polishing (#60×3 times) | 3.1 |
| B8 | | Polishing (#60×4 times) | 1.6 |
| B9 | | Polishing (#60×5 times) | 0.9 |
| C1 | C | Shotpeening | 2.1 |
| D1 | D | Shotpeening | 2.0 |
| E1 | E | Shotpeening | 1.9 |
| F1 | F | Shotpeening | 1.9 |
| G1 | G | Shotpeening | 2.1 |
| H1 | H | Shotpeening | 2.2 |
| I1 | I* | Shotpeening | 2.3 |
| J1 | J * | Shotpeening | 2.0 |
| K1 | K* | Shotpeening | 2.2 |
| L1 | L | Shotpeening | 1.9 |
| M1 | M | Shotpeening | 2.2 |
| N1 | N | Shotpeening | 2.0 |
| O1 | O * | Shotpeening | 2.0 |
| P1 | P * | Shotpeening | 2.1 |
| Q1 | Q * | Shotpeening | 2.2 |

* indicates that the condition fell out of the range defined in the present invention.
** indicates that the condition fell out of the preferable range defined in the present invention.

An arithmetic average roughness of each test plate was measured using a contact type roughness gauge. In addition, two test plates of each of the alloy types were prepared, and an end face of each test plates in a rolling direction was beveled as illustrated in Figure 1. Beveled end faces of these test plates were butted against each other and subjected to root pass welding using a filler material having a chemical composition shown in Table 3 and an outer diameter of 1.0 mm, by which a welded joint was obtained. In the welding, a heat input was set at about 5 kJ/cm, and Ar gas was used as shielding gas and back shielding gas and was flowed to a welding location at a flow rate of 10 L/min.

[Table 3]

Table 3

| Chemical Composition (mass%, Balance: Ni and impurities) | | | | | | | | | | | | | | | |
|---|---|---|---|---|---|---|---|---|---|---|---|---|---|---|---|
| C | Si | Mn | P | S | Cu | Co | Cr | Mo | W | Fe | N | Al | O | V | S+2O |
| 0.004 | 0.04 | 0.48 | 0.005 | 0.0015 | 0.04 | 0.12 | 15.9 | 16.0 | 3.4 | 5.5 | 0.0020 | 0.05 | 0.0035 | 0.23 | 0.0085 |

**EP 3 913 101 B1**

Of the obtained welded joints, welded joints each of which a back bead was formed across an overall length of its weld line were determined to have no problem in capability of forming an internal bead of the alloy tube and were rated as "Good". Of such welded joints, welded joints each of which a width of a back bead was 2 mm or more across an overall length of its weld line were rated as "Excellent", and welded joints each of which a width of a back bead formed was less than 2 mm but 1 mm or more were rated as "Acceptable". A back bead in this example corresponds to an internal bead that is formed when the weld is made from the outside of the alloy tube.

Thereafter, three transverse sections were made to appear from each welded joint, and welded joints each of which the sections all had a back bead height of 1.0 mm or less were determined to be good in shape of an internal bead of an alloy tube and were rated as "Good". Of such welded joints, welded joints each of which the sections all had a back bead height of 0.8 mm or less were rated as "Excellent", and the other welded joints were rated as "Acceptable". Results are collectively shown in Table 4 below.

[Table 4]

Table 4

| Test piece | Alloy type | Welded joint | | |
| --- | --- | --- | --- | --- |
| | | Capability of forming back bead | Shape of back bead | |
| A1 | A | Good (Excellent) | Good(Excellent) | Inventive example |
| A2 | | Good (Excellent) | Good (Excellent) | |
| A3 | | Good (Excellent) | Good (Acceptable) | |
| A4 | | Good (Excellent) | Good (Acceptable) | |
| A5 | | Good (Excellent) | Good (Excellent) | |
| A6 | | Good (Excellent) | Good (Excellent) | |
| A7 | | Good (Excellent) | Good (Excellent) | |
| A8 | | Good (Excellent) | Good (Excellent) | |
| A9 | | Good (Excellent) | Good (Excellent) | |
| B1 | B | Good (Excellent) | Good (Excellent) | |
| B2 | | Good (Excellent) | Good (Excellent) | |
| B3 | | Good (Excellent) | Good (Acceptable) | |
| B4 | | Good (Excellent) | Good (Acceptable) | |
| B5 | | Good (Excellent) | Good (Excellent) | |
| B6 | | Good (Excellent) | Good (Excellent) | |
| B7 | | Good (Excellent) | Good (Excellent) | |
| B8 | | Good (Excellent) | Good (Excellent) | |
| B9 | | Good (Excellent) | Good (Excellent) | |
| C1 | C | Good (Excellent) | Good (Excellent) | |
| D1 | D | Good (Excellent) | Good (Excellent) | |
| E1 | E | Good (Excellent) | Good (Excellent) | |
| F1 | F | Good (Excellent) | Good (Excellent) | |
| G1 | G | Good (Excellent) | Good (Acceptable) | |
| H1 | H | Good (Acceptable) | Good (Excellent) | |

(continued)

| Test piece | Alloy type | Welded joint | | |
| --- | --- | --- | --- | --- |
| | | Capability of forming back bead | Shape of back bead | |
| I1 | I * | Good (Excellent) | Bad | Comparative example |
| J1 | J * | Bad | Good (Excellent) | |
| K1 | K * | Good (Excellent) | Bad | |
| L1 | L | Good (Excellent) | Good (Excellent) | Inventive example |
| M1 | M | Good (Excellent) | Good (Excellent) | |
| N1 | N | Good (Excellent) | Good (Excellent) | |
| O1 | O * | Good (Excellent) | Bad | Comparative example |
| P1 | P * | Good (Excellent) | Bad | |
| Q1 | Q * | Bad | Good (Excellent) | |

* indicates that the condition fell out of the range defined in the present invention.
The underlined indicates that the property fell out of the target property in the present invention.

Test pieces made of alloy types A to H and L to N all satisfied the specifications according to the present invention, and their capabilities of forming a back bead and shapes of their back beads were good. Of these, the test piece M1 made of the alloy type M satisfied the range specified by Formula (i), and therefore, its capability of forming a back bead and a height of its back bead were both satisfactory.

In contrast, for both of test pieces I1 and K1 made of the alloy types I and K, their contents of S and O did not satisfy Formula (i) and were higher than the respective specified ranges. Therefore, sagging of its molten metal was significant, and a height of its back bead did not satisfy a target of the height. For a test piece J1 made of the alloy type J, a relation between its contents of S and O did not satisfy Formula (i), and the contents were lower than the respective specified ranges. Therefore, melting in a plate thickness direction was not sufficient, and a capability of forming the back bead as targeted was not obtained.

For test pieces O1 and P1 made of the alloy types O and P, their contents of S, O, and Sn were higher than the range specified by Formula (i), or their contents of Sn were more than the specified range. Therefore, sagging of its molten metal was large, and a back bead height as targeted was not satisfied. A test piece Q1 made of the alloy type Q, its contents of S, O, and Sn did not satisfy Formula (i). Therefore, melting in a plate thickness direction was not sufficient, and a capability of forming the back bead did not satisfy a target of the capability.

INDUSTRIAL APPLICABILITY

The present invention makes it possible to obtain a Ni-based alloy tube that allows an internal bead to be formed stably during butt welding and prevents a reinforcement with excessive height.

**Claims**

1. A Ni-based alloy tube having a chemical composition consisting of, in mass%:

C: 0.0010 to 0.0200%,
Si: 0.01 to 0.12%,
Mn: 0.04 to 0.50%,
P: 0.015% or less,
S: 0.0001 to 0.0020%,
Cu: 0.02 to 0.80%,
Co: 0.10 to 2.50%,
Cr: 14.0 to 17.0%,
Mo: 15.0 to 17.5%,
W: 2.8 to 4.8%,

Fe: 4.0 to 7.5%,
N: 0.0010 to 0.0200%,
Al: 0.04 to 0.50%,
O: 0.0004 to 0.0100%,
Sn: 0 to 0.010%, and
optionally,
V: 0.40% or less,
Ti: 0.40% or less,
Nb: 0.40% or less,
Ta: 0.40% or less,
Ca: 0.0030% or less,
Mg: 0.0030% or less,
B: 0.0100% or less, and
REM: 0.0100% or less,
with the balance: Ni and impurities, and
satisfying Formula (i) below:

$$0.0010 \leq S + 2O + 0.2Sn \leq 0.0170 \qquad (i)$$

where each symbol of an element in the formula indicates a content of the element in mass% contained in Ni-based alloy, and a content being zero means that the element is not contained.

2. The Ni-based alloy tube according to claim 1, wherein on an internal surface of the Ni-based alloy tube, an arithmetic average roughness Ra of the tube in a longitudinal direction is 7.0 $\mu$m or less.

3. The Ni-based alloy tube according to claim 1 or 2, including a welded joint.

4. A method of preparing a welded joint, comprising welding together end portions of the Ni-based alloy tubes according to claim 1 or 2.

**Patentansprüche**

1. Rohr aus einer Legierung auf Ni-Basis mit einer chemischen Zusammensetzung bestehend aus, in Masse-%:

C: 0,0010 bis 0,0200%,
Si: 0,01 bis 0,12%,
Mn: 0,04 bis 0,50%,
P: 0,015% oder weniger,
S: 0,0001 bis 0,0020%,
Cu: 0,02 bis 0,80%,
Co: 0,10 bis 2,50%,
Cr: 14,0 bis 17,0%,
Mo: 15,0 bis 17,5%,
W: 2,8 bis 4,8%,
Fe: 4,0 bis 7,5%,
N: 0,0010 bis 0,0200%,
Al: 0,04 bis 0,50%,
O: 0,0004 bis 0,0100%,
Sn: 0 bis 0,010%, und
optional,
V: 0,40% oder weniger,
Ti: 0,40% oder weniger,
Nb: 0,40% oder weniger,
Ta: 0,40% oder weniger,
Ca: 0,0030% oder weniger,
Mg: 0,0030% oder weniger,

B: 0,0100% oder weniger und
REM: 0,0100% oder weniger,
mit dem Rest: Ni und Verunreinigungen, und
wobei die nachstehende Formel (i) erfüllt wird:

$$0.0010 \leq S + 2O + 0.2Sn \leq 0.0170 \quad \text{(i)}$$

wobei jedes Symbol eines Elements in der Formel einen Gehalt des Elements in Masse-% angibt, der in der Legierung auf Ni-Basis enthalten ist, und ein Gehalt von Null bedeutet, dass das Element nicht enthalten ist.

2. Rohr aus einer Legierung auf Ni-Basis nach Anspruch 1, wobei auf einer inneren Oberfläche des Rohres aus der Legierung auf Ni-Basis ein arithmetisches Mittel der Rauigkeit Ra des Rohres in einer Längsrichtung 7,0 μm oder weniger beträgt.

3. Rohr aus einer Legierung auf Ni-Basis nach Anspruch 1 oder 2, umfassend eine Schweißverbindung.

4. Verfahren zur Herstellung einer Schweißverbindung, umfassend das Zusammenschweißen von Endabschnitten der Rohre aus der Legierung auf Ni-Basis nach Anspruch 1 oder 2.


**Revendications**

1. Tube en alliage à base de Ni ayant la composition chimique consistant en, en % en masse :

C : 0,0010 à 0,0200 %,
Si : 0,01 à 0,12 %,
Mn : 0,04 à 0,50 %,
P : 0,015 % ou inférieur,
S : 0,0001 à 0,0020 %,
Cu : 0,02 à 0,80 %,
Co : 0,10 à 2,50 %,
Cr : 14,0 à 17,0 %,
Mo : 15,0 à 17,5 %,
W : 2,8 à 4,8 %,
Fe : 4,0 à 7,5 %,
N : 0,0010 à 0,0200 %,
Al : 0,04 à 0,50 %,
O : 0,0004 à 0,0100 %,
Sn : 0 à 0,010 %, et
éventuellement,
V : 0,40 % ou inférieur,
Ti : 0,40 % ou inférieur,
Nb : 0,40 % ou inférieur,
Ta : 0,40% ou inférieur,
Ca : 0,0030 % ou inférieur,
Mg : 0,0030 % ou inférieur,
B : 0,0100 % ou inférieur, et
REM : 0,0100 % ou inférieur,
avec le reste : Ni et impuretés, et
satisfaisant la formule (i) ci-dessous :

$$0,0010 \leq S + 2O + 0,2\,Sn \leq 0,0170 \quad \text{(i)}$$

où chaque symbole d'un élément dans la formule indique une teneur de l'élément en % en masse contenu dans l'alliage à base de Ni, et une teneur étant égale à zéro indique que l'élément n'est pas contenu.

**2.** Tube en alliage à base de Ni selon la revendication 1, dans lequel sur une surface interne du tube en alliage à base de Ni, une rugosité moyenne arithmétique Ra du tube dans une direction longitudinale est de 7,0 $\mu$m ou inférieure.

**3.** Tube en alliage à base de Ni selon la revendication 1 ou 2, incluant un joint soudé.

**4.** Procédé de préparation d'un joint soudé, comprenant le soudage ensemble de portions d'extrémité des tubes en alliage à base de Ni selon la revendication 1 ou 2.

Figure 1

**EP 3 913 101 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 54110918 A
- JP 63089637 A
- JP 2156034 A
- JP 3173732 A
- JP 5271832 A
- JP 9087786 A
- JP 10030140 A
- JP 2012072446 A
- JP H073368 A
- CN 101906557 A